# EUROPEAN PATENT APPLICATION

(11) **EP 4 793 846 A1**
(43) Date of publication of application: **19.08.2026**
(21) Application number: 25227786.8
(22) Date of filing: 30.12.2025
(51) Int. Cl.: G06Q 10/04, G06F 16/14, G06F 16/16, G06Q 10/063, G06Q 10/0635, G06Q 10/0639

(54) **COMPUTER SYSTEM AND METHOD OF SUPPORTING SELECTION OF MEASURE**

(30) Priority: 14.02.2025 JP 2025022148
(71) Applicant: Hitachi, Ltd., Tokyo 100-8280 (JP)
(72) Inventor: KUDO, Yasuyuki, Tokyo, 100-8280 (JP)
(74) Representative: Mewburn Ellis LLP

(57) **Abstract**

A computer system stores information on a model that receives data including values of parameters representing attributes of the site and the group as an input and outputs an outcome indicator. The computer system generate an initial data including initial values of the parameters, repeatedly perform processing of changing the initial value of a parameter included in the initial data to generate a piece of analysis data, repeatedly perform processing of calculating a difference between the outcome indicator obtained by inputting the piece of analysis data into the model and the outcome indicator obtained by inputting the initial data into the model, and calculating a evaluation indicator representing a magnitude of an influence of a value of the parameter changed for generating the piece of analysis data on the outcome indicator based on the difference; and select a measure based on the evaluation indicator.

## Description

### CLAIM OF PRIORITY

The present application claims priority from Japanese patent application JP 2025-022148 filed on February 14, 2025, the content of which is hereby incorporated by reference into this application.

### BACKGROUND OF THE INVENTION

### 1. Field of the Invention

The present invention relates to a technique for supporting selection of a measure for promoting an action change of a group.

### 2. Description of the Related Art

In order to achieve a predetermined objective in a group working on a site, a measure for promoting an action change of the group is performed. By using a mathematical model that calculates an outcome indicator representing the degree of achievement of an objective with parameters representing attributes of the site and the group as variables, a combination of values of parameters that maximize or minimize the outcome indicator can be searched for. As a technique for optimizing a combination of parameter values, for example, a technique described in JP 2004-121953 A is known.

JP 2004-121953 A describes that "a parameter numerical value is optimized by a method including: simulating a progressing biochemical reaction with input of data such as a water quality, a flow rate, and a temperature of a sewage treatment plant, and a parameter and a state variable constituting a biochemical reaction model; comparing an actual measurement value of water quality with the calculation result; repeatedly performing the simulation while changing the parameters until a difference therebetween becomes sufficiently small; and performing a final simulation operation based on the optimized parameter numerical value, in which sensitivity analysis of the parameter is performed in order to preferentially change a parameter having a large influence on water quality, a parameter to be preferentially changed is selected by evaluating the sensitivity analysis result, and simulation is repeatedly performed while changing the selected parameter numerical value".

### SUMMARY OF THE INVENTION

Combinations of parameters and values to be changed by measures are different for measures. Since the technique described in JP 2004-121953 A is a technique of searching for a combination of values of parameters that maximize or minimize an outcome indicator, it is not necessarily possible to implement a measure using that combination. Therefore, it is difficult to select a measure even using the technique described in JP 2004-121953 A.

An objective of the present invention is to provide a system and a method for supporting selection of a measure.

A representative example of the present invention disclosed in this specification is as follows: a computer system that supports selection of at least one measure for promoting a change in action of a group working on a site to achieve a predetermined objective of the group. The computer system comprises an arithmetic device, and a storage device coupled to the arithmetic device. The storage device stores information on a model that receives a piece of data including values of a plurality of parameters representing attributes of the site and the group as an input and outputs an outcome indicator representing a degree of achievement of the objective. The arithmetic device is configured to: generate a piece of initial data including initial values of the plurality of parameters set by a user; repeatedly perform processing of selecting one of the plurality of parameters and changing the initial value of a selected parameter included in the piece of initial data to generate a piece of first analysis data; repeatedly perform, for each of a plurality of pieces of first analysis data, processing of calculating a difference between the outcome indicator obtained by inputting the piece of first analysis data into the model and the outcome indicator obtained by inputting the piece of initial data into the model, and calculating a first evaluation indicator representing a magnitude of an influence of a value of the parameter changed for generating the piece of first analysis data on the outcome indicator based on the difference; and select the at least one measure for verifying an effect based on the first evaluation indicator.

According to the present invention, it is possible to support selection of a measure. Problems, configurations, and effects other than those described above will be clarified by the following description of embodiments.

### BRIEF DESCRIPTION OF THE DRAWINGS

The present invention can be appreciated by the description which follows in conjunction with the following figures, wherein:
Fig. 1 is a flowchart illustrating an example of processing performed by a computer according to a first embodiment;
Fig. 2 is a diagram illustrating an example of a configuration of the computer according to the first embodiment;
Fig. 3 is a diagram illustrating an example of a setting range DB according to the first embodiment;
Fig. 4 is a diagram illustrating an example of a measure DB of the first embodiment;
Fig. 5 is a diagram illustrating an example of data stored in a parameter DB of the first embodiment;
Fig. 6 is a diagram illustrating an example of a screen displayed by the computer according to the first embodiment;
Fig. 7 is a diagram illustrating an example of an influence analysis data set of the first embodiment;
Fig. 8 is a diagram illustrating an example of an influence analysis result DB of the first embodiment;
Fig. 9 is a diagram illustrating an example of a screen displayed by the computer according to the first embodiment;
Fig. 10 is a diagram illustrating an example of a measure effect analysis data set of the first embodiment;
Fig. 11 is a diagram illustrating an example of a screen displayed by the computer according to the first embodiment;
Fig. 12 is a diagram illustrating an example of a screen displayed by the computer according to the first embodiment;
Fig. 13 is a diagram illustrating an example of a configuration of the computer according to a second embodiment;
Fig. 14 is a diagram illustrating an example of a condition DB of the second embodiment; and
Fig. 15 is a diagram illustrating an example of the measure effect analysis data set of the first embodiment.

### DESCRIPTION OF THE PREFERRED EMBODIMENTS

Now, description is given of at least one embodiment of this invention referring to the drawings. It should be noted that this invention is not to be construed by limiting the invention to the content described in the following at least one embodiment. A person skilled in the art would easily recognize that specific configurations described in the following at least one embodiment may be changed within the scope of the concept and the gist of this invention.

In configurations of the at least one embodiment of this invention described below, the same or similar components or functions are denoted by the same reference numerals, and a redundant description thereof is omitted here.

Notations of, for example, "first", "second", and "third" herein are assigned to distinguish between components, and do not necessarily limit the number or order of those components.

The position, size, shape, range, and the like of each configuration illustrated in the drawings and the like may not represent the actual position, size, shape, range, and the like in order to facilitate understanding of the invention. Therefore, the present invention is not limited to the position, size, shape, range, and the like disclosed in the drawings and the like.

### First embodiment

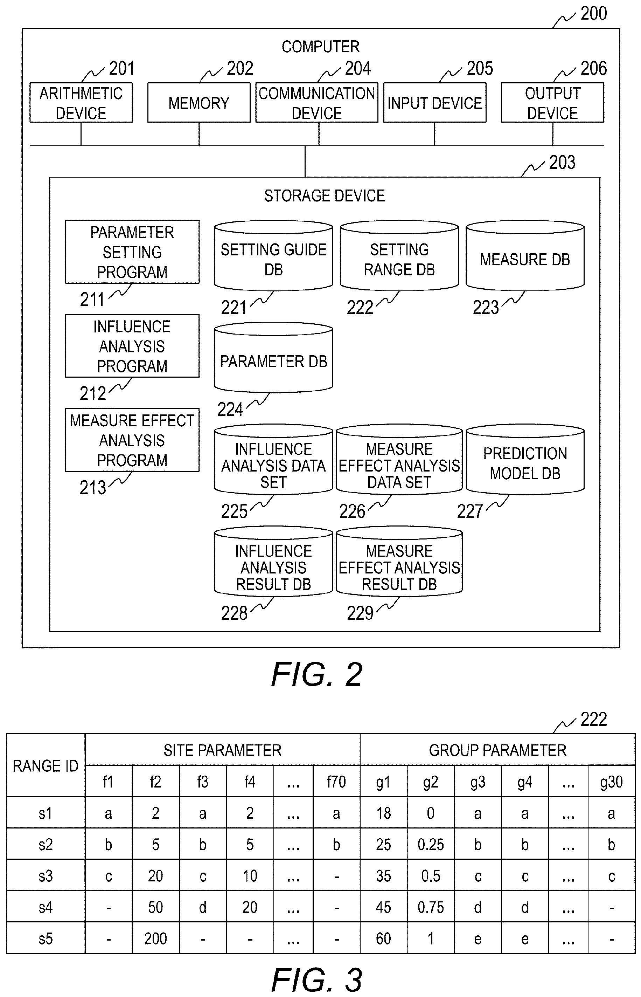

First, a hardware configuration and a software configuration of a computer that implements the present invention will be described. Fig. 2 is a diagram illustrating an example of a configuration of a computer according to a first embodiment.

A computer 200 includes, as hardware components, an arithmetic device 201, a memory 202, a storage device 203, a communication device 204, an input device 205, and an output device 206. Hardware elements are connected via a bus.

The arithmetic device 201 is a central processing unit (CPU), a graphics processing unit (GPU), or the like, and executes a program stored in the memory 202. The arithmetic device 201 performs processing according to a program to operate as a functional unit (module) that implements a specific function. In the following description, when processing is described with a program as a subject, it means that the arithmetic device 201 is executing the program.

The memory 202 is a dynamic random access memory (DRAM) or the like, and stores a program executed by the arithmetic device 201 and information used by the program. The memory 202 is also used as a work area.

The storage device 203 is a hard disk drive (HDD), a solid state drive (SSD), a flash memory, or the like, and is a large-capacity storage device. The storage device 203 stores a parameter setting program 211, an influence analysis program 212, and a measure effect analysis program 213. The storage device 203 stores a setting guide DB 221, a setting range DB 222, a measure DB 223, a parameter DB 224, an influence analysis data set 225, a measure effect analysis data set 226, a prediction model DB 227, an influence analysis result DB 228, and a measure effect analysis result DB 229.

The arithmetic device 201 reads the program and data stored in a database from the storage device 203, and loads the program and the data into the memory 202.

The communication device 204 is a LAN adapter or the like, and is connected to a network such as a local area network (LAN). The input device 205 is a keyboard, a mouse, a touch panel, or the like. The output device 206 is a display, a printer, or the like.

The function implemented by the program may be implemented by a virtual computer, a computer system, or a dedicated circuit such as a field-programmable gate array (FPGA) or an application specific integrated circuit (ASIC).

In order to achieve a predetermined objective in a group working on a site, the computer 200 supports selection of a measure for promoting an action change of the group.

The group on the site is represented using values of parameters representing attributes of the site and the group. Measures are expressed as operations for converting a certain parameter into a specific value. Various measures can be set by changing combinations of parameters and values. However, there is a case where the parameters cannot be changed to predetermined values depending on the characteristics of the site or the group, thus measure cannot be implemented.

Next, the database held by the computer 200 will be described.

The setting guide DB 221 is a database for managing a setting guide for the value of each parameter.

The setting range DB 222 is a database for managing a setting range for the value of each parameter. Fig. 3 is a diagram illustrating an example of the setting range DB 222 according to the first embodiment.

The setting range DB 222 illustrated in Fig. 3 has a data structure of a matrix format, in which range IDs are on the row, and parameter groups of the site and parameter groups of the group are on the column. Values corresponding to the parameter range IDs are stored in the cells. In Fig. 3, there are 70 site parameters and 30 group parameters. Note that the types of the parameter are exemplary and the types of the parameter are not limited thereto.

In the present embodiment, the values are set to take a maximum of five values. For parameters that take less than five values, some cells are blank. For example, the site parameter "f1" can take any of three values: "a", "b", or "c". The group parameter "g1" can take any of five values: "18", "25", "35", "45", and "60".

In the present embodiment, the parameters take discrete values, but the parameter range may be continuous values.

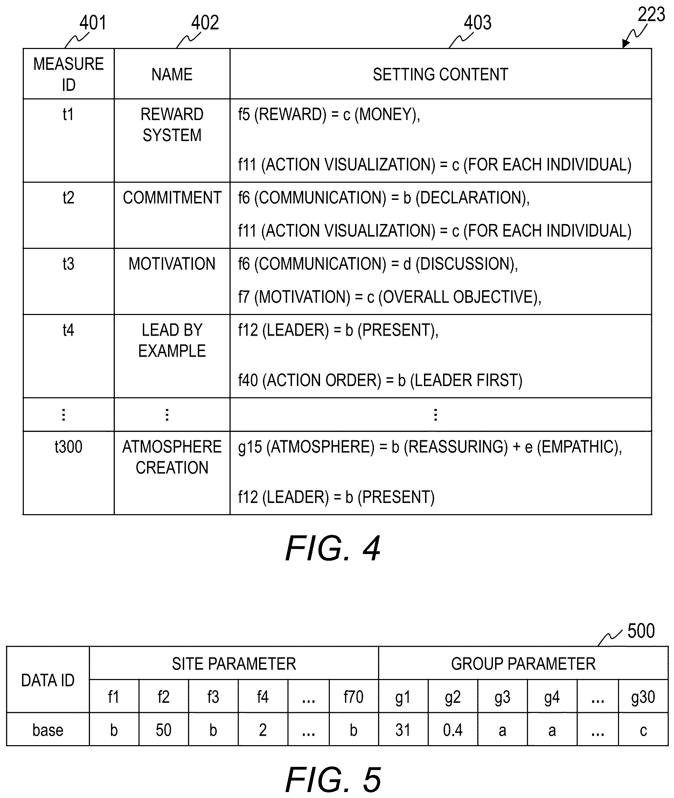

The measure DB 223 is a database for managing measures. Fig. 4 is a diagram illustrating an example of the measure DB 223 of the first embodiment.

The measure DB 223 illustrated in Fig. 4 has a data structure of a table format, and stores records each including a measure ID 401, a name 402, and setting content 403. One record exists for one measure.

The measure ID 401 is a field for storing the ID of a measure. The name 402 is a field for storing the name of the measure. The setting content 403 is a field for storing the contents of the measures, that is, combinations of parameters and values changed by implementation of the implemented measure.

The parameter DB 224 is a database for managing values of parameters for target groups. Fig. 5 is a diagram illustrating an example of data stored in the parameter DB 224 of the first embodiment. The parameter DB 224 stores, for example, data 500 as illustrated in Fig. 5. The data 500 includes data ID and values of the respective parameters of the site parameter group and the group parameter group. The data 500 illustrated in Fig. 5 is data initially set by a user, and "base" is set as the data ID. In the following description, data initially set by a user is referred to as initial data.

The prediction model DB 227 is a database for managing a prediction model. The prediction model is a model that receives a value of each parameter as an input and outputs an outcome indicator indicating a degree of achievement of an objective. The prediction model is, for example, a machine learning model such as a neural network. The outcome indicator is, for example, the cooperation rate of the entire group. In the present embodiment, the greater the outcome indicator, the greater the degree of achievement of an objective.

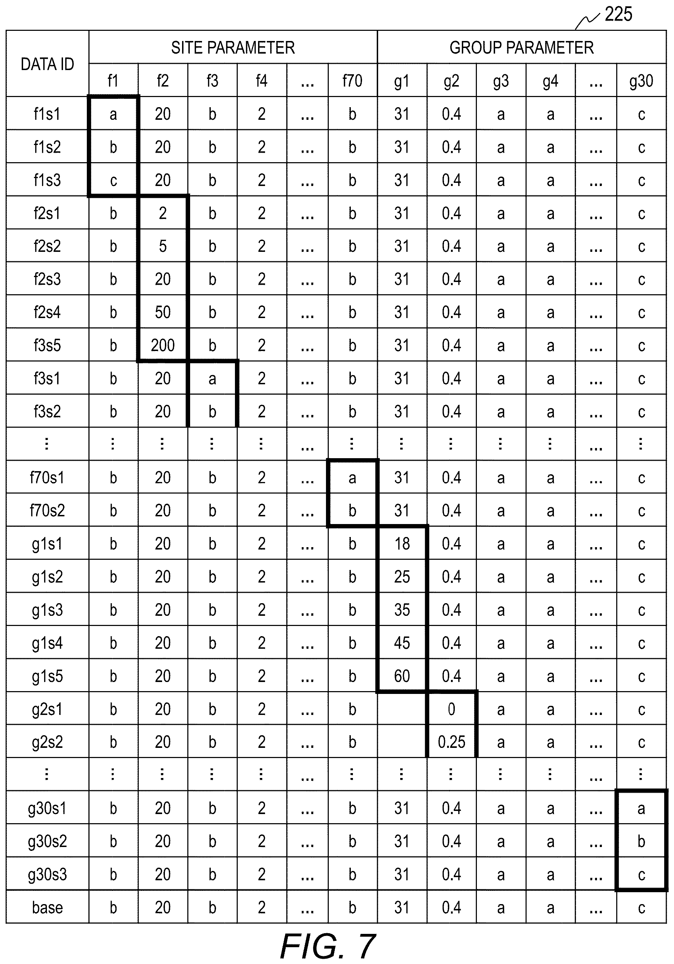

The influence analysis data set 225 is a data set used to analyze the magnitude (influence) of a change in an outcome indicator when a parameter of initial data is changed from an initial value to a specific value. Details of the influence analysis data set 225 will be described with reference to Fig. 7.

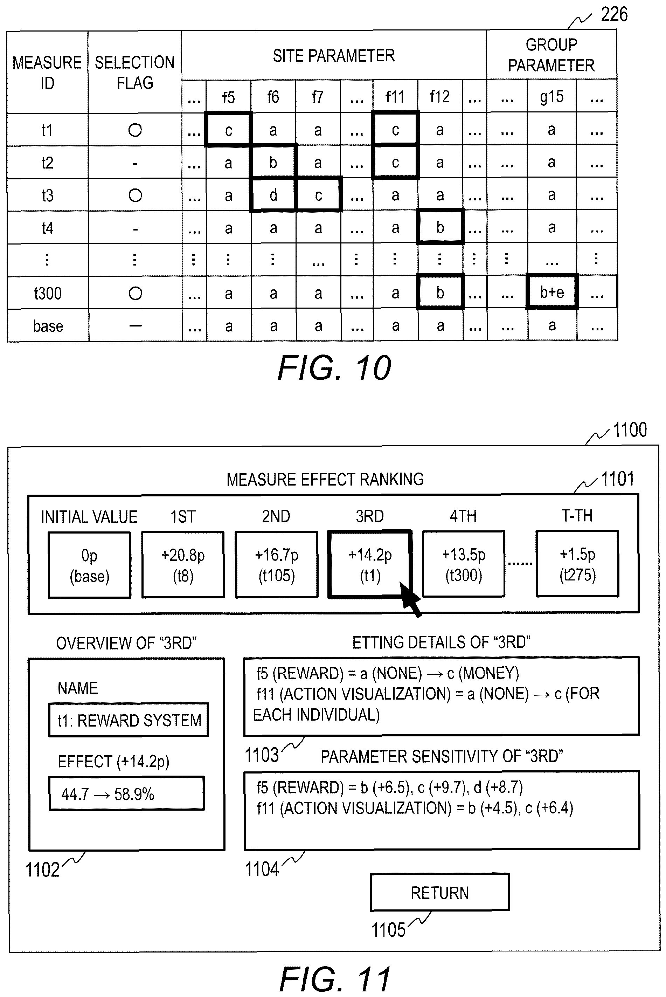

The measure effect analysis data set 226 is a data set used to analyze the effects of the measures. Details of the measure effect analysis data set 226 will be described with reference to Fig. 10. The effect of a measure is the magnitude of change in the outcome indicator when the value of a certain parameter in the initial data is changed based on the content of the measure.

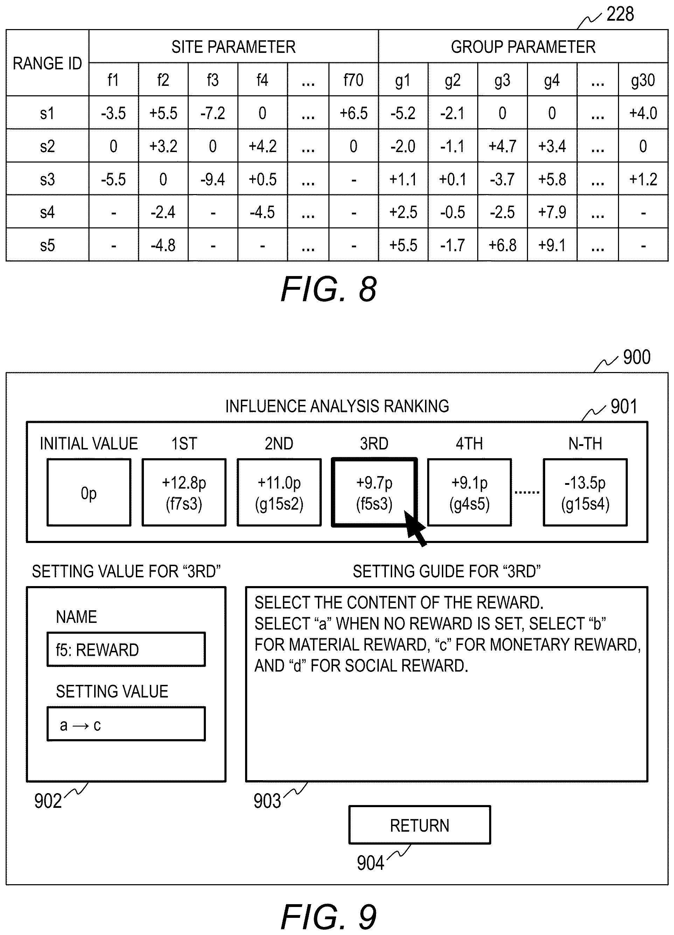

The influence analysis result DB 228 is a database for managing the result of the influence analysis. Details of the influence analysis result DB 228 will be described with reference to Fig. 8.

The measure effect analysis result DB 229 is a database for managing the analysis results of the measure effects.

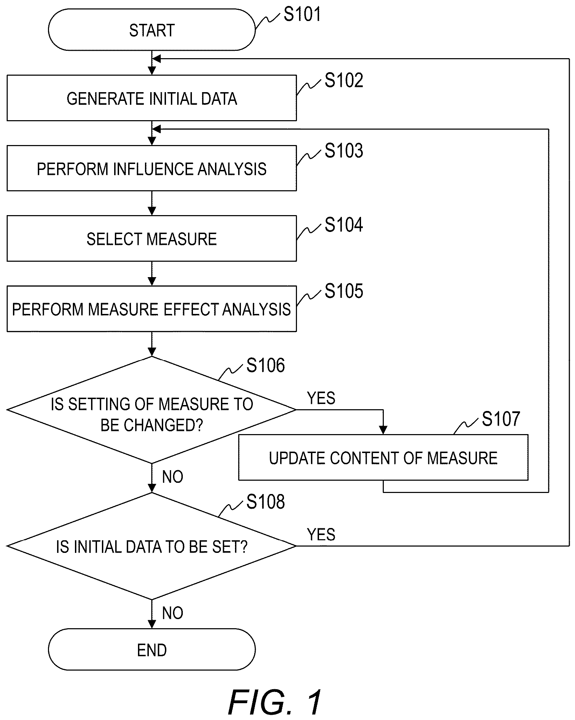

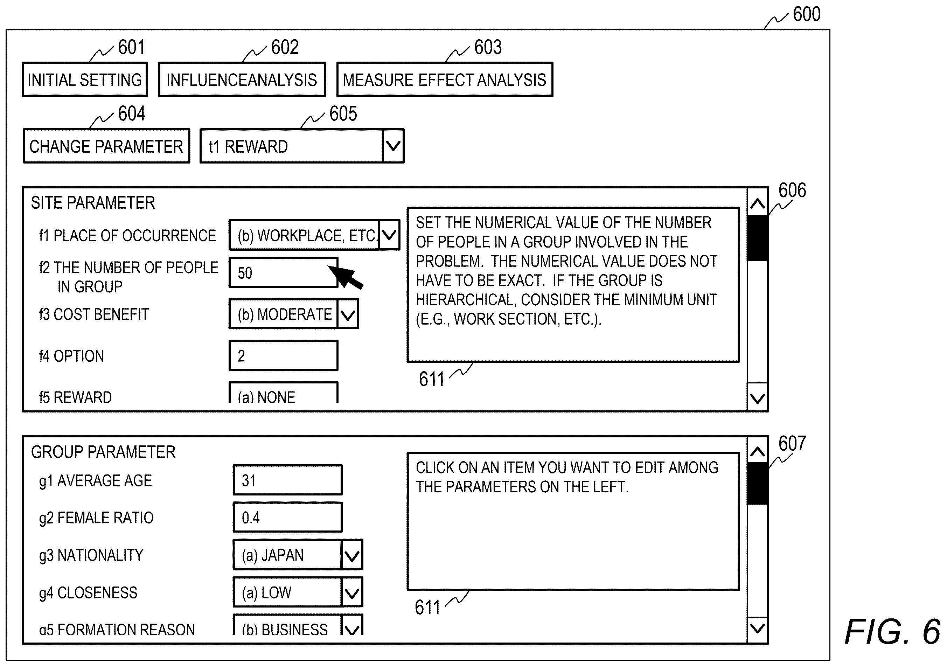

Next, processing performed by the computer 200 will be described. Fig. 1 is a flowchart illustrating an example of processing performed by the computer 200 according to the first embodiment. Figs. 6, 9, 11, and 12 are diagrams illustrating examples of screens displayed by the computer 200 according to the first embodiment. Fig. 7 is a diagram illustrating an example of the influence analysis data set of the first embodiment. Fig. 8 is a diagram illustrating an example of the influence analysis result DB 228 of the first embodiment. Fig. 10 is a diagram illustrating an example of the measure effect analysis data set 226 of the first embodiment.

When receiving a request from a user, the computer 200 starts the processing (step S101).

The computer 200 displays a screen 600 as illustrated in Fig. 6 and waits for a user operation. The screen 600 includes buttons 601, 602, 603, and 604, a selection field 605, and setting areas 606 and 607.

The button 601 is a button for setting an initial value of each parameter. When a user operates the button 601, the computer 200 displays parameters in the setting areas 606 and 607, and enables the operation of the setting areas 606 and 607.

The setting area 606 is an area for setting initial values of parameters of a site. In the setting area 606, a plurality of input fields for inputting initial values of parameters are displayed. When a user selects one of the input fields, a setting guide of the parameter value is displayed in a display field 611.

The setting area 607 is an area for setting initial values of parameters of a group. In the setting area 607, a plurality of input fields for inputting initial values of parameters are displayed. When a user selects one of the input fields, a setting guide of the parameter value is displayed in a display field 611.

The button 602 is an operation button for instructing the computer 200 to perform the influence analysis. The button 603 is an operation button for instructing the computer 200 to perform the measure effect analysis. The button 604 is a button for changing the contents of the measure. The selection field 605 is a field for selecting a measure for which the content is to be changed.

A user presses the button 601, performs input to the setting areas 606 and 607, and presses the button 602.

When the button 602 is operated, the parameter setting program 211 generates initial data and stores the initial data in the parameter DB 224 (step S102), and the influence analysis program 212 performs the influence analysis (step S103). Specifically, the following processing is performed.

(S103-1) The influence analysis program 212 selects a parameter, changes a value of the selected parameter within a range, generates a piece of first analysis data in which values of initial data are set to parameters other than the selected parameter, and registers the piece of first analysis data in the influence analysis data set 225. Fig. 7 illustrates an example of the influence analysis data set 225. The thick frames indicate changed values. f1sn (n is an integer from 1 to 5) represents a plurality of pieces of first analysis data generated by changing the value of the parameter f1. As illustrated in Fig. 3, the parameter f1 has three values, so that three pieces of first analysis data are generated.

(S103-2) The influence analysis program 212 determines whether the plurality of pieces of first analysis data have been generated for all the parameters. When the plurality of pieces first analysis data have not been generated for all the parameters, the influence analysis program 212 returns to S103-1.

(S103-3) When the piece of first analysis data is generated for all the parameters, the influence analysis program 212 calculates an outcome indicator (base indicator) by inputting the initial data to the prediction model.

(S103-4) The influence analysis program 212 selects one parameter (target parameter).

(S103-5) The influence analysis program 212 selects the piece of first analysis data generated by changing the value of the target parameter within the range.

(S103-6) The influence analysis program 212 calculates an outcome indicator by inputting the selected piece of first analysis data to the prediction model. The influence analysis program 212 calculates a difference between the outcome indicator and the base indicator. In the present embodiment, the difference is used as a first evaluation indicator indicating the magnitude of the influence on the outcome indicator when the initial value of the target parameter of the initial data is changed to the value of the target parameter of the piece of first analysis data. The first evaluation indicator may be calculated using a mathematical expression using the difference as a parameter. The influence analysis program 212 registers the ID of the piece of first analysis data, the value of the target parameter of the piece of first analysis data, and the first evaluation indicator in the influence analysis result DB 228 as an analysis result.

Fig. 8 illustrates an example of the influence analysis result DB 228. For example, when the piece of first analysis data with the data ID "f1s1" is selected, the calculated outcome indicator is stored in the cell with the range ID "s1" and the parameter "f1". A cell in which the piece of first analysis data related to the range ID does not exist is blank.

(S103-7) The influence analysis program 212 determines whether all of the plurality of pieces of first analysis data of the selected parameter have been processed. When all of the plurality of pieces of first analysis data of the selected parameter have not been processed, the influence analysis program 212 returns to S103-5.

(S103-8) When all of the plurality of pieces of first analysis data of the selected parameter have been processed, the influence analysis program 212 determines whether all the parameters have been processed. When all the parameters have not been processed, the influence analysis program 212 returns to S103-4.

(S103-9) When all the parameters have been processed, the influence analysis program 212 presents the analysis result to a user and ends the influence analysis. For example, the influence analysis program 212 transitions the screen 600 to a screen 900 as illustrated in Fig. 9. The screen 900 includes display fields 901, 902, and 903 and a button 904.

The display field 901 is a field for displaying analysis results sorted in descending order of the first evaluation indicators. Note that analysis results sorted based on the absolute value of the first evaluation indicator may be displayed. When a user selects an analysis result in the display field 901, the change content of the parameter with respect to the initial data is displayed in the display field 902, and the setting guide of the changed parameter is displayed in the display field 903. The button 904 is a button for transitioning to the screen 600.

The user presses the button 904 to transition to the screen 600, and then operates the button 603.

When the button 603 is operated, the measure effect analysis program 213 selects measures to be verified (step S104).

Specifically, the measure effect analysis program 213 selects the analysis results from the first to the n-th in descending order of magnitude of the first evaluation indicator. The measure effect analysis program 213 selects a measure that includes the value of the parameter changed from the initial data in the content of the measure in order to generate the piece of first analysis data corresponding to each of the selected analysis results. For example, when the piece of first analysis data is generated by changing f5 to "c", a measure for changing f5 to "c" is selected.

The measure effect analysis program 213 performs a measure effect analysis (step S105). Specifically, the following processing is performed.

(S105-1) The measure effect analysis program 213 calculates an outcome indicator (base indicator) by inputting the data 500 to the prediction model.

(S105-2) For each measure, the measure effect analysis program 213 generates a piece of second analysis data by changing the parameter value of the initial data based on the setting content 403 of the measure, and registers the piece of second analysis data in the measure effect analysis data set 226. Fig. 10 illustrates an example of the measure effect analysis data set 226. The thick frames indicate changed values.

(S105-3) The measure effect analysis program 213 selects one measure from among the measures selected in step S104, and acquires a piece of second analysis data corresponding to the selected measure from the measure effect analysis data set 226.

(S105-4) The measure effect analysis program 213 calculates an outcome indicator by inputting the acquired piece of second analysis data to the prediction model. The measure effect analysis program 213 calculates a difference between the outcome indicator and the base indicator. In the present embodiment, the difference is used as a second evaluation indicator indicating the magnitude of the effect of the measure. The second evaluation indicator may be calculated using a mathematical expression using the difference as a parameter. The measure effect analysis program 213 registers the ID of the measure and the second evaluation indicator as analysis results in the measure effect analysis result DB 229.

(S105-5) The measure effect analysis program 213 determines whether the processing has been completed for all the measures selected in step S104. When the processing has not been completed for all the measures selected in step S104, the measure effect analysis program 213 returns to S105-3.

(S105-6) When the processing has been completed for all the measures selected in step S104, the measure effect analysis program 213 presents the analysis results to a user and ends the measure effect analysis. For example, the measure effect analysis program 213 transitions the screen 600 to a screen 1100 as illustrated in Fig. 11. The screen 1100 includes display fields 1101, 1102, 1103, and 1104 and a button 1105.

The display field 1101 is a field for displaying analysis results sorted in descending order of the effects. When a user selects an analysis result in the display field 1101, the name and effect of the measure are displayed in the display field 1102, and the change content of the parameter from the initial data is displayed in the display field 1103. In addition, results of the influence analysis of the parameters are displayed in the display field 1104. The button 1105 is a button for transitioning to the screen 600.

By presenting the contents of the measures, that is, the combinations of the parameters and the values in the display field 1104, it is possible to support the decision of the policy for changing the contents of the measures.

In a case where the content of a measure needs to be changed, a user sets a target measure in the selection field 605 and operates the button 604. When changing at least one of the site and the group, the user presses the button 601, performs input to the setting areas 606 and 607, and presses the button 602.

The computer 200 waits for an operation from a user. When receiving an operation from a user, the computer 200 determines whether a setting change instruction of a measure is received (step S106). Specifically, the computer 200 determines whether the button 604 has been operated.

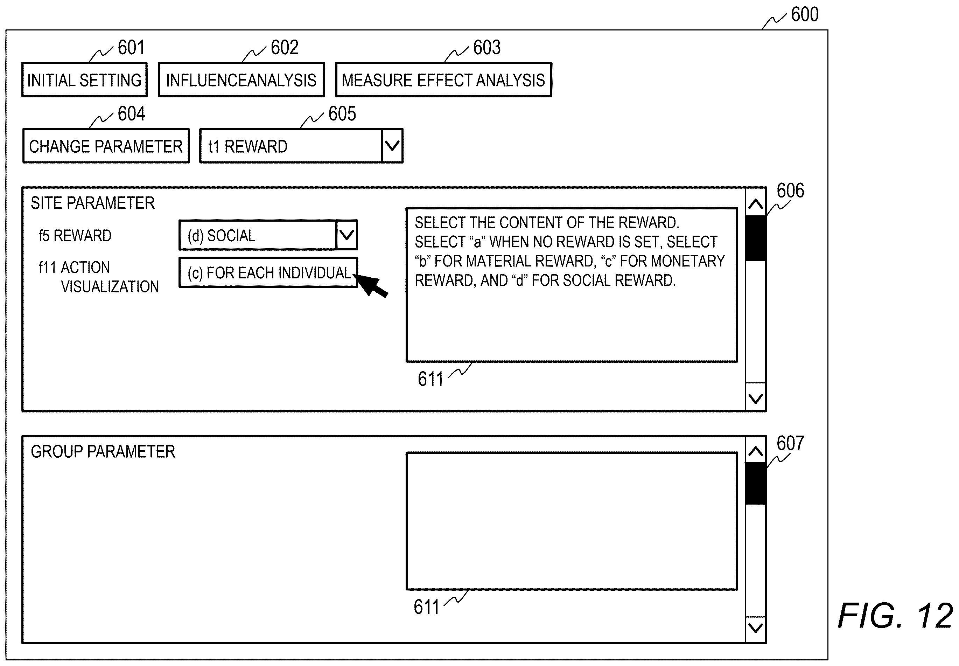

When receiving a setting change instruction of a measure, the computer 200 transitions to a parameter change mode of the measure, and updates the content of the measure based on the operation content of the user (step S107). The computer 200 then returns to step S103. Specifically, the parameter setting program 211 presents the screen 600 as illustrated in Fig. 12 and displays parameters to be changed.

When the received operation is not a setting change instruction of a measure, the computer 200 determines whether an initial data setting instruction is received (step S108).

Upon reception of an initial data setting instruction, the computer 200 returns to step S102. Upon reception of an end instruction, the computer 200 ends the series of processing steps.

The screens for performing data input, instructing performance of processing, and the like are examples, and are not necessarily as those described above. An interface for performing an operation by a voice operation may be used.

According to the first embodiment, the computer 200 can narrow down measures to be verified based on the magnitudes of the influences of the changes in the values of the parameters on the outcome indicators and the setting contents of the measures. As a result, the computer 200 can verify the effects of the measures efficiently and quickly.

In a case where it is difficult to realize the content of the measure, that is, it is difficult to change the value of the parameter due to the characteristics of a site or a group, a user can set the value of the parameter having a high feasibility and a high improving effect on the outcome indicator based on the knowledge of the parameters and the first evaluation indicators. When there are a plurality of parameters, it is difficult to determine a parameter to be changed and a value of the parameter. However, the parameter to be changed and the value to which the parameter is changed can be easily determined by referring to the presentation of the present embodiment.

### Second embodiment

In a second embodiment, the processing content of the measure effect analysis is partially different. Hereinafter, the second embodiment will be described focusing on a difference from the first embodiment.

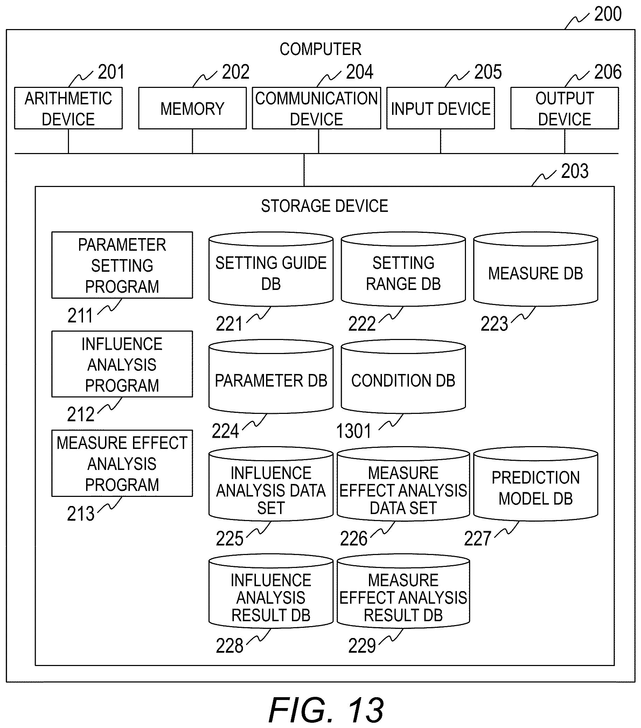

Fig. 13 is a diagram illustrating an example of a configuration of the computer 200 according to the second embodiment.

A hardware configuration of the computer 200 of the second embodiment is the same as that of the first embodiment. A software configuration of the computer 200 of the second embodiment is partially different from that of the first embodiment. Specifically, the computer 200 of the second embodiment holds a condition DB 1301.

The condition DB 1301 is a database for managing conditions of values of parameters recommended for measures.

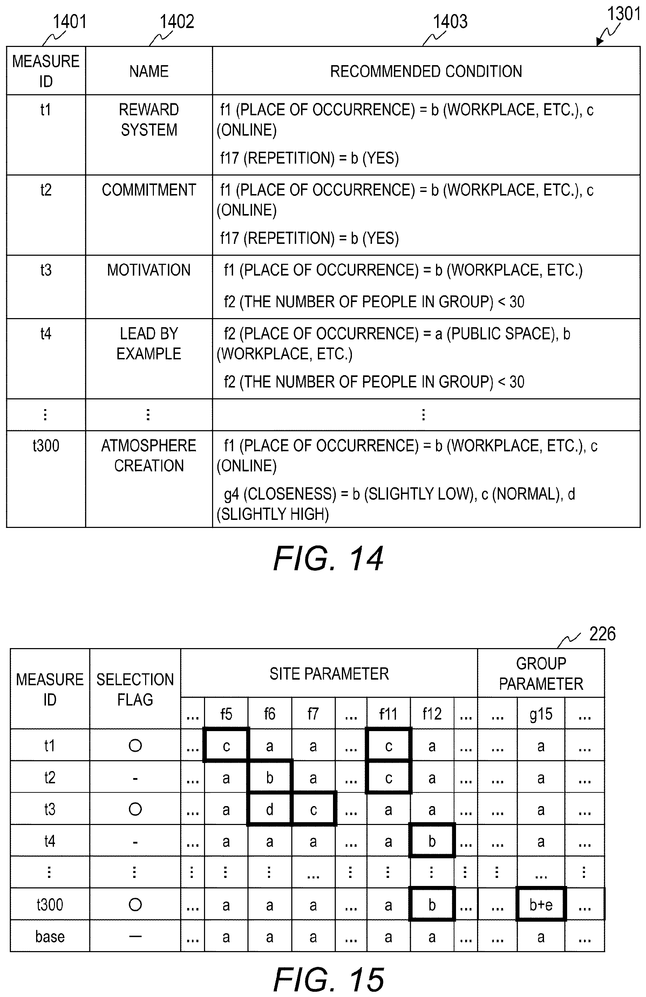

Fig. 14 is a diagram illustrating an example of the condition DB 1301 of the second embodiment.

The condition DB 1301 illustrated in Fig. 14 has a data structure of a table format, and stores records each including a measure ID 1401, a name 1402, and recommended condition 1403. One record exists for one measure.

The measure ID 1401 is a field for storing the ID of a measure. The name 1402 is a field for storing the name of the measure. The recommended condition 1403 is a field for storing a value of a parameter recommended for measures. Specifically, the recommended condition 1403 includes one or more combinations of parameters and values.

The flow of processing performed by the computer 200 of the second embodiment is the same as that of the first embodiment. However, the processing of step S104 and the processing of step S105 are partially different.

In step S104, the measure effect analysis program 213 selects the analysis results from the first to the n-th in descending order of magnitude of the second evaluation indicator. The measure effect analysis program 213 selects a measure having a value to which the parameter is changed that matches the value of the parameter changed from the initial data in order to generate the piece of first analysis data corresponding to each of the selected analysis results. In addition, the measure effect analysis program 213 determines whether the recommended condition is satisfied for each selected measure. The measure effect analysis program 213 adds a first selection flag to a measure that satisfies the recommended condition, and adds a second selection flag to a measure that does not satisfy the recommended condition. In the second embodiment, a measure effect analysis data set 226 as illustrated in Fig. 15 is generated. The first selection flag is indicated by a circle symbol, and the second selection flag is indicated by a triangle symbol.

In step S105, the measure effect analysis program 213 selects a measure to which the first selection flag is added and a measure to which the second selection flag is added as measures to be verified. In a case of selecting a measure to which the second selection flag is added, the measure effect analysis program 213 stores the ID of the measure, the second evaluation indicator, and an alert as the analysis result in a measure effect analysis result DB 229. Only a measure to which the first selection flag is added may be selected.

When displaying the analysis result, the measure effect analysis program 213 presents information indicating that a measure for which an alert is set is less possibly implemented.

Presentation of an alert can support selection of a measure that can be implemented.

The present invention is not limited to the above embodiment and includes various modification examples. In addition, for example, the configurations of the above embodiment are described in detail so as to describe the present invention comprehensibly. The present invention is not necessarily limited to the embodiment that is provided with all of the configurations described. In addition, a part of each configuration of the embodiment may be removed, substituted, or added to other configurations.

A part or the entirety of each of the above configurations, functions, processing units, processing means, and the like may be realized by hardware, such as by designing integrated circuits therefor. In addition, the present invention can be realized by program codes of software that realizes the functions of the embodiment. In this case, a storage medium on which the program codes are recorded is provided to a computer, and a CPU that the computer is provided with reads the program codes stored on the storage medium. In this case, the program codes read from the storage medium realize the functions of the above embodiment, and the program codes and the storage medium storing the program codes constitute the present invention. Examples of such a storage medium used for supplying program codes include a flexible disk, a CD-ROM, a DVD-ROM, a hard disk, a solid state drive (SSD), an optical disc, a magnetooptical disc, a CD-R, a magnetic tape, a non-volatile memory card, and a ROM.

The program codes that realize the functions written in the present embodiment can be implemented by a wide range of programming and scripting languages such as assembler, C/C++, Perl, shell scripts, PHP, Python and Java.

It may also be possible that the program codes of the software that realizes the functions of the embodiment are stored on storing means such as a hard disk or a memory of the computer or on a storage medium such as a CD-RW or a CD-R by distributing the program codes through a network and that the CPU that the computer is provided with reads and executes the program codes stored on the storing means or on the storage medium.

In the above embodiment, only control lines and information lines that are considered as necessary for description are illustrated, and all the control lines and information lines of a product are not necessarily illustrated. All of the configurations of the embodiment may be connected to each other.

## Claims

1. A computer system that supports selection of at least one measure for promoting a change in action of a group working on a site to achieve a predetermined objective of the group,
the computer system comprising:
an arithmetic device; and
a storage device coupled to the arithmetic device,
the storage device storing information on a model that receives a piece of data including values of a plurality of parameters representing attributes of the site and the group as an input and outputs an outcome indicator representing a degree of achievement of the objective, and
the arithmetic device being configured to:
generate a piece of initial data including initial values of the plurality of parameters set by a user;
repeatedly perform processing of selecting one of the plurality of parameters and changing the initial value of a selected parameter included in the piece of initial data to generate a piece of first analysis data;
repeatedly perform, for each of a plurality of pieces of first analysis data, processing of calculating a difference between the outcome indicator obtained by inputting the piece of first analysis data into the model and the outcome indicator obtained by inputting the piece of initial data into the model, and calculating a first evaluation indicator representing a magnitude of an influence of a value of the parameter changed for generating the piece of first analysis data on the outcome indicator based on the difference; and
select the at least one measure for verifying an effect based on the first evaluation indicator.

2. The computer system according to claim 1, wherein
the storage device stores a measure database for managing a piece of measure data including identification information on the at least one measure and a content of the at least one measure, and
the content of the at least one measure is a combination of the parameter to be changed by implementation of the at least one measure and the value of the parameter, and
the arithmetic device is configured to:
select the value of the parameter having a large influence on the outcome indicator based on the first evaluation indicator; and
select the at least one measure including the value of the parameter selected in the content of the at least one measure.

3. The computer system according to claim 2, wherein
the arithmetic device is configured to:
repeatedly perform processing of selecting one of the at least one measure selected based on a magnitude of the first evaluation indicator, and changing the initial value of the parameter included in the piece of initial data based on the content of the selected at least one measure to generate a piece of second analysis data;
calculate, for each of a plurality of pieces of second analysis data, a difference between the outcome indicator obtained by inputting the piece of second analysis data into the model and the outcome indicator obtained by inputting the piece of initial data into the model, and calculate a second evaluation indicator indicating a magnitude of an effect of the at least one measure based on the difference; and
output an analysis result including the at least one measure selected based on the magnitude of the first evaluation indicator and the second evaluation indicator.

4. The computer system according to claim 3, wherein
the storage device stores a condition database for managing a plurality of pieces of condition data; each of the plurality of pieces of condition data including identification information on the at least one measure and a recommended condition of the value of the parameter recommended in a case where the at least one measure is implemented, and
the arithmetic device is configured to:
determine whether the content of the at least one measure selected based on the magnitude of the first evaluation indicator satisfies the recommended condition; and
include, in the analysis result of the at least one measure having the content that does not satisfy the recommended condition, information indicating that the content of the at least one measure does not satisfy the recommended condition.

5. The computer system according to claim 3, wherein
the arithmetic device is configured to include, in the analysis result, a change content of the value of the parameter from the piece of initial data and the first evaluation indicator related to the parameter for which the initial value of the piece of initial data is changed.

6. A method of supporting selection of at least one measure performed by a computer system for promoting a change in action of a group working on a site to achieve a predetermined objective of the group,
the computer system including an arithmetic device and a storage device coupled to the arithmetic device,
the storage device storing information on a model that receives a piece of data including values of a plurality of parameters representing attributes of the site and the group as an input and outputs an outcome indicator representing a degree of achievement of the objective, and
the method of supporting selection of at least one measure including:
a first step of generating, by the arithmetic device, a piece of initial data including initial values of the plurality of parameters set by a user;
a second step of repeatedly performing, by the arithmetic device, processing of selecting one of the plurality of parameters and changing the initial value of a selected parameter included in the piece of initial data to generate a piece of first analysis data;
a third step of repeatedly performing, by the arithmetic device, for each of a plurality of pieces of first analysis data, processing of calculating a difference between the outcome indicator obtained by inputting the piece of first analysis data into the model and the outcome indicator obtained by inputting the piece of initial data into the model, and calculating a first evaluation indicator representing a magnitude of an influence of a value of the parameter changed for generating the piece of first analysis data on the outcome indicator based on the difference; and
a fourth step of selecting, by the arithmetic device, the at least one measure for verifying an effect based on the first evaluation indicator.

7. The method of supporting selection of at least one measure according to claim 6, wherein
the storage device stores a measure database for managing a piece of measure data including identification information on the at least one measure and a content of the at least one measure, and
the content of the at least one measure is a combination of the parameter to be changed by implementation of the at least one measure and a value of the parameter, and
the fourth step includes:
selecting, by the arithmetic device, the value of the parameter having a large influence on the outcome indicator based on the first evaluation indicator; and
selecting, by the arithmetic device, the at least one measure including the value of the parameter selected in the content of the at least one measure.

8. The method of supporting selection of at least one measure according to claim 7, comprising:
a fifth step of repeatedly performing, by the arithmetic device, processing of selecting one of the at least one measure selected based on a magnitude of the first evaluation indicator, and changing the initial value of the parameter included in the piece of initial data based on the content of the at least one measure to generate a piece of second analysis data;
a sixth step of calculating, by the arithmetic device, for each of a plurality of piece of second analysis data, a difference between the outcome indicator obtained by inputting the piece of second analysis data into the model and the outcome indicator obtained by inputting the piece of initial data into the model, and calculating a second evaluation indicator indicating a magnitude of an effect of the at least one measure based on the difference; and
a seventh step of outputting, by the arithmetic device, an analysis result including the at least one measure selected based on the magnitude of the first evaluation indicator and the second evaluation indicator.

9. The method of supporting selection of at least one measure according to claim 8, wherein
the storage device stores a condition database for managing a plurality of pieces of condition data; each of the plurality of pieces of condition data including identification information on the at least one measure and a recommended condition of the value of the parameter recommended in a case where the at least one measure is implemented,
the fourth step includes determining, by the arithmetic device, whether the content of the at least one measure selected based on the magnitude of the first evaluation indicator satisfies the recommended condition, and
the seventh step includes including, in the analysis result of the at least one measure having the content that does not satisfy the recommended condition, information indicating that the content of the at least one measure does not satisfy the recommended condition.

10. The method of supporting selection of at least one measure according to claim 8, wherein
the seventh step includes including, by the arithmetic device, in the analysis result, a change content of the value of the parameter from the piece of initial data and the first evaluation indicator related to the parameter for which the initial value of the piece of initial data is changed.
